# EUROPEAN PATENT SPECIFICATION

(11) **EP 3 738 098 B1**
(45) Date of publication and mention of the grant of the patent: **09.10.2024**
(21) Application number: 19852404.3
(22) Date of filing: 01.08.2019
(51) Int. Cl.: G06T 7/11, G06T 7/12, G06T 7/136, G06T 7/155, G06T 7/181, G06T 7/187, G06T 7/194, G06T 5/77

(54) **BINARIZATION AND NORMALIZATION-BASED INPAINTING FOR REMOVING TEXT**
INPAINTING AUF DER GRUNDLAGE VON BINARISIERUNG UND NORMIERUNG ZUM ENTFERNEN VON TEXT
RETOUCHE À BASE DE BINARISATION ET DE NORMALISATION POUR SUPPRIMER UN TEXTE

(30) Priority: 21.08.2018 US 201862720558 P
(43) Date of publication of application: 18.11.2020
(73) Proprietor: HUAWEI TECHNOLOGIES CO., LTD., Shenzhen, Guangdong 518129 (CN)
(72) Inventor: XU, Huihui, Bellevue, WA 98006 (US); SU, Wei, Redmond, WA 98053 (US); SUN, Hongyu, Sammamish, WA 98074 (US); ZHU, Xiaoxing, Bellevue, WA 98006 (US); ZHANG, Fan, Sammamish, WA 98074 (US)
(74) Representative: Grünecker Patent- und Rechtsanwälte PartG mbB
(86) International application number: PCT/CN2019/098808
(87) International publication number: WO 2020/038207

(56) References cited:
- CN-A- 105 957 004
- US-A1- 2015 086 112
- US-A1- 2016 217 557
- US-A1- 2017 091 948
- US-A1- 2018 103 892
- AZADBONI MOHAMMAD KHODADADI ET AL: "Text Localization, Extraction and Inpainting in Color Images using Combined Structural and Textural Features", INTERNATIONAL JOURNAL OF INFORMATION AND COMMUNICATION TECHNOLOGY RESEARCH, 2015, pages 19 - 31, XP055791152, Retrieved from the Internet <URL:http://ijict.itrc.ac.ir/article-1-99-en.pdf> [retrieved on 20210329]
- MOSLEH ALI ET AL: "Automatic Inpainting Scheme for Video Text Detection and Removal", IEEE TRANSACTIONS ON IMAGE PROCESSING, IEE SERVICE CENTER , PISCATAWAY , NJ, US, vol. 22, no. 11, November 2013 (2013-11-01), pages 4460 - 4472, XP011527290, ISSN: 1057-7149, [retrieved on 20130916], DOI: 10.1109/TIP.2013.2273672
- SULIMARSKI R ET AL: "Detecting highlights and notes on printed text", ELECTRICAL AND ELECTRONICS ENGINEERS IN ISRAEL, 2008. IEEEI 2008. IEEE 25TH CONVENTION OF, IEEE, PISCATAWAY, NJ, USA, 3 December 2008 (2008-12-03), pages 711 - 715, XP031399502, ISBN: 978-1-4244-2481-8
- G KARAPETYAN , H.G SARUKHANYAN , S.S AGAIAN: "Robust digital image inpainting algorithm in the wireless environment", PROCEEDINGS OF SPIE, vol. 9120, 22 May 2014 (2014-05-22), pages 1 - 8, XP060037912, DOI: :10.1117/12.2049942
- AKHTER, SHAMEEM ET AL.: "Image Completion with Structure and Texture Inpainting", INTERNATIONAL JOURNAL FOR ADVANCE RESEARCH IN ENGINEERING AND TECHNOLOGY, 31 August 2013 (2013-08-31), XP058335277

## Description

### TECHNICAL FIELD

The disclosure herein is directed to an image processing device and associated method and, more particularly, to systems and methods for text region binarization and normalization-based inpainting for removing different types of text and restoring the background of images.

### BACKGROUND

Digital inpainting is the process of applying algorithms to images to replace lost, deteriorated, or corrupted parts of the image data. Inpainting may be used to replace lost blocks in the coding and transmission of images and to remove logos or text from images and videos and to fill in the missing details of the original image. There are many applications of image inpainting ranging from restoration of photographs, films, removal of occlusions such as text, subtitle, logos, stamps, scratches, etc.

Sometimes an image may contain embedded text that is to be removed for aesthetic, translation, or other reasons. In such cases, the goal is to remove the undesired text, to recover the background of the image where the text was located, and to inpaint the text regions with the image background. However, the process becomes complicated when the text area is not horizontal and is rotated at an angle. Also, the characters in the text region may have any text size, artistic font, or color, further complicating the text removal and inpainting process. Existing processes do not effectively remove such text and inpaint multiple text regions with various kinds of text style and angles with high efficiency and low power consumption for application of text inpainting on mobile devices, for example.

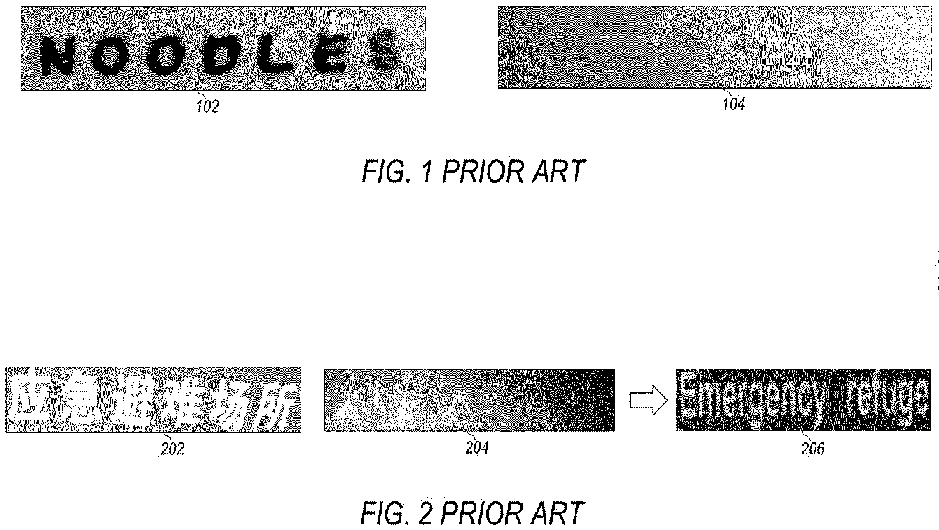

As just noted, one of the applications for inpainting is the removal of text or objects such as text-subtitle and logos from an image. **FIG. 1** shows a further example where the text "NOODLES" in image 102 is removed and the background is inpainted in image 104. As illustrated, the inpainted image 104 is inconsistent. In text translation applications, it is desired to remove the original text and to replace the original text with the translated text. **FIG. 2** illustrates a translator application where inpainting is used to remove the original characters in image 202 to obtain a clean background 204 before rendering the translated text 206, in this case, "Emergency refuge."

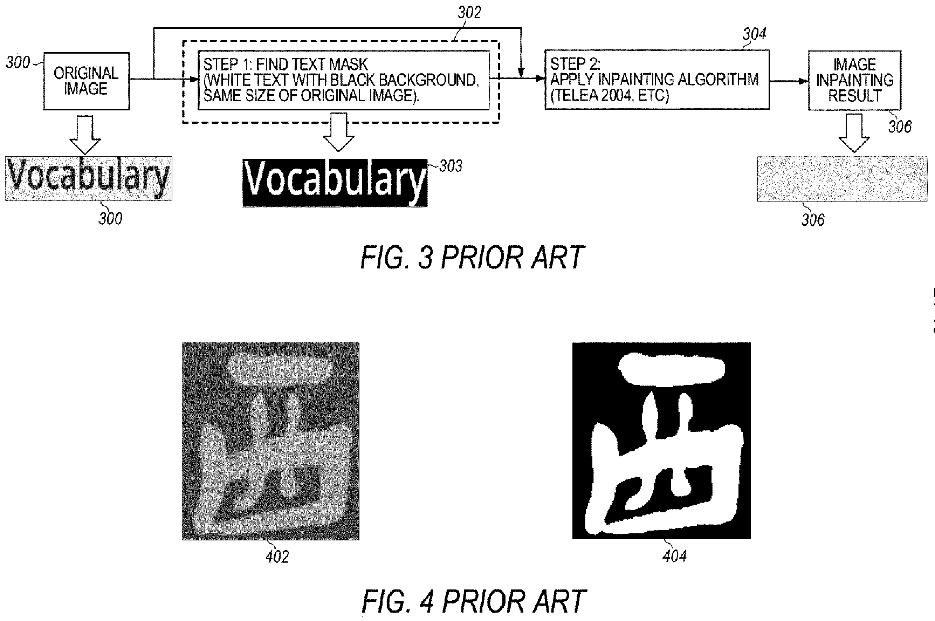

A general inpainting framework for rendering images as shown in **FIG. 2** is shown in **FIG. 3****.** As illustrated, there are two steps:
1. Find the text mask (image segmentations) the same size as the original image 300 where the text is labelled as white and background is labelled as black (step 302). The text mask 303 distinguishes the pixels of the text foreground and background. An ideal mask would cover all the pixels of text. Techniques for separating the foreground from the background include, for example, the adaptive thresholding techniques described in US 9,042,649.
2. Use the text mask with the original image and apply a specific inpainting algorithm at step 304, such as the open sourced image inpainting algorithm disclosed by Telea in "An image inpainting technique based on the fast-marching method," Journal of graphics tools 9.1 (2004), pp. 25-36, (https://docs.opencv.org/ref/master/df/d3d/tutorial_py_inpainting.html) to obtain the inpainted image. The algorithm starts from the boundary of the region and goes inside the region gradually filling everything in the boundary first. It takes a small neighborhood around the pixel on the neighborhood to be inpainted. This pixel is replaced by normalized weighted sum of all the known pixels in the neighborhood. Once a pixel is inpainted, it moves to the next nearest pixel using the Fast-Marching Method. Other inpainting techniques include, for example, the method for inpainting images described in CN 102567955 by repeatedly determining the outline of the to-be-inpainted region and inpainting unknown pixel points of all outline point setting neighborhoods of the to-be-inpainted region of the image inwards in sequence layer by layer until the to-be-inpainted region is filled to create the image inpainting result 306.

This approach relies on an initialization of a start point on the contour which is not robust. It also adopts a recursion scheme to update the inpainting result which will cause a speed issue. Existing approaches for finding the text mask include the use of image binarization segmentation to convert a pixel image 402 into a binary image 404 having values of 0 and 255 as shown, for example, in **FIG. 4****.** Binarization is used to find a threshold locally or globally to segment the image. If a pixel value is greater than the threshold, the pixel value is set to 255, while if the pixel value is less than the threshold, the pixel value is set to 0. However, most binarization algorithms are limited due to the low illumination or contrast in the image leading to incorrect separation of texts from the background. For example, Otsu's binarization method automatically performs clustering-based image thresholding to find the threshold globally but is not robust enough to handle low illumination and contrast in parts of the image.

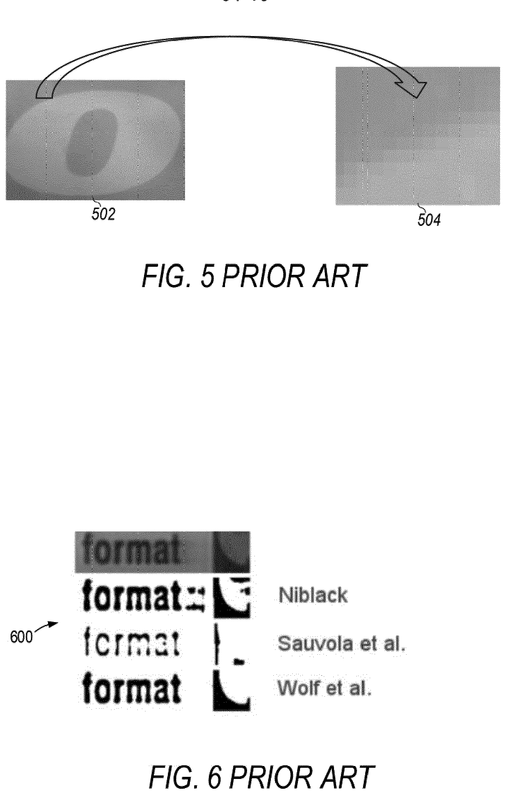

The binarization process may cause loss of text information especially for the pixels on the edge. Usually, the edge between text and background is not ideally sharp where there is a blurred transition area as shown by the closeup of image 502 at 504 in **FIG. 5****,** for example. Due to this limitation, the results 600 of existing binarization algorithms such as the Niblack, Sauvola et al. and Wolf et al. algorithms depicted in **FIG. 6** are sub-optimal as text pixels are labelled incorrectly or the background is mislabeled as text. Descriptions of these algorithms may be found at Niblack, W.: "An introduction to digital image processing," (Prentice- Hall, Englewood Cliffs, NJ, 1986), pp. 115-116; Sauvola, J., et al.: "Adaptive document binarization," Proc. 4th Int. Conf. on Document Analysis and Recognition, Ulm Germany, 1997, pp. 147-152; and C. Wolf, et al.: "Text localization enhancement and binarization in multimedia documents," Proc. Int. Conf. Pattern Recognition, vol. 4, pp. 1037-1040, 2002. Moreover, binarization is the process that segments the image but does not determine the foreground and background. If it wrongly labels text as background, the real background will be inpainted with text color.

Bhuvaneswari, et al. disclose another approach in "Automatic Detection and Inpainting of Text Images," International Journal of Computer Applications (0975- 8887), Volume 61, No.7, 2013, that resizes the input image to 400 by 400 pixels and applies the Niblack method for local threshold binarization. Then they use the connected component method to find the possible text area and to set two thresholds to remove non-text regions. The binary image of text regions after dilation is the mask for inpainting. However, this algorithm is limited in that the Niblack method is a local threshold binarization method and has limitations on its usage. Also, the procedure of resizing the input image to 400 by 400 pixels causes text information loss, especially for text in a long line of text. In addition, the criteria for setting the threshold to remove macros or large connected regions is not robust. The resulting binary mask for inpainting the text region is not sufficient for many cases, especially where the image quality is low or the illumination is non-uniform. The document "Text Localization, Extraction and Inpainting in Color Images using Combined Structural and Textural Features", Azadboni Mohammad Khodadadi et al., International Journal of Infromation and Communication Technology Research, 2015m pages 19-31, discloses an approach for text detection, extraction and inpainting in color images. The algorithm includes three stages. In the first stage, several gradient based operators and image corners are utilized to localize text blocks. An SVM based text verification algorithm is then employed with a new set of features to reject non-text blocks. In the third stage, the inpainting algorithm is applied to restore initial image contents.

### SUMMARY

Various examples are now described to introduce a selection of concepts in a simplified form that are further described below in the Detailed Description. The Summary is not intended to identify key or essential features of the claimed subject matter, nor is it intended to be used to limit the scope of the claimed subject matter.

The systems and methods described herein address the limitations of the prior art by improving the accuracy of the mask of a text area of the original image for labelling of the text area for inpainting. The systems and methods described herein addresses the problems noted above with using binarization to extract the text area masks. In a sample embodiment, three masks based on a normalization of black background and white characters are combined into a fusion mask: a binary mask, an edge mask, and a contour mask. Alternatively, only two of the three masks may be combined into a fusion mask (i.e. a contour mask and an edge mask or a binary mask). The advantages provided by each type of mask guarantee that the text pixels in the original image are fully covered by the inpainting. The whole background is retrieved by applying the fusion mask with the inpainting algorithm on the input image. Normalization of the image to a black background and white characters decides the text binary mask as foreground for inpainting, while the fusion mask includes the edge feature of the text as well as the inside text pixels, which guarantees the accuracy of segmentation for the text. Also, the processing is not complex, which enables the use of the system and method to implement text inpainting on a mobile device with relatively low processing power and impact on battery life.

According to a first aspect of the present disclosure, there is provided a computer-implemented method of finding a text mask in an original image for extracting text for inpainting according to independent claim 1. The method includes the steps of applying, with one or more processors, edge detection to detect an edge of text in the original image as an edge mask, and using the edge mask to find a set of hierarchical closed edge contours of the text and to fill in the closed edge contours with pixels labeled as possible text as a contour mask. A binarization method is applied to the original image to convert the original image into a binary image and to detect a stroke edge of the text in the binary image, and the binary image is partitioned based on the detected stroke edge of the text in the binary image. At least one binarization method is applied on each image partition to obtain at least one binary mask candidate as foreground for inpainting. The contour mask and at least one of the edge mask and binary mask are combined into a fusion mask and the fusion mask is applied to the original image to extract the text in the original image and to obtain an original background of the original image without the text. Portions of the original image are inpainted where the text has been extracted. The advantages provided by each type of mask combined into the fusion mask guarantee that the text pixels in the original image are fully covered by the inpainting.

According to a second aspect of the present disclosure, there is provided an image processing device as defined in independent claim 9. As with the first aspect, the advantages provided by each type of mask combined into the fusion mask guarantee that the text pixels in the original image are fully covered by the inpainting.

According to a third aspect of the present disclosure, there is provided a non-transitory computer-readable medium as defined in independent claim 10. As with the first and second aspects, the advantages provided by each type of mask combined into the fusion mask guarantee that the text pixels in the original image are fully covered by the inpainting.

In a first implementation of any of the preceding aspects, the original image is converted to a grayscale image prior to applying the edge detection.

In a second implementation of any of the preceding aspects, applying the edge detection comprises applying at least one of a morphological gradient edge detection algorithm and a Sobel operator edge detection algorithm to the original image to detect the edge of text in the original image.

In a third implementation of any of the preceding aspects, using the edge mask to find the set of hierarchical closed edge contours of the text comprises applying the morphological gradient edge detection algorithm to the original image to create a morphological gradient contour mask, applying the Sobel operator edge detection algorithm to the grayscale image to create a Sobel contour mask, and combining the morphological gradient contour mask with the Sobel contour mask to create the contour mask.

In a fourth implementation of any of the preceding aspects, a connected components method is applied to fill in the pixels bounded by the contour mask to fill in the closed edge contour.

In a fifth implementation of any of the preceding aspects, applying the binarization method to the original image to convert the original image into the binary image and to detect the stroke edge of the text in the binary image comprises at least one of binarizing a lightness channel in a hue, lightness, and saturation color space for the original image to enhance a contrast of the original image, binarizing a contrast limited adaptive histogram equalization of a LAB color space binarization to enhance the contrast of the original image, binarizing the lightness channel of the LAB color space by applying a Principal Component Analysis binarization to enhance the contrast of the original image, and choosing a best binary image from binary images generated by each binarization method.

In a sixth implementation of any of the preceding aspects, applying the binarization method to the original image to convert the original image into the binary image and to detect the stroke edge of the text in the binary image comprises at least one of taking an inverse of the binarized lightness channel in the hue, lightness, and saturation color space for the original image, taking an inverse of the binarized contrast limited adaptive histogram equalization of the LAB color space binarization, taking an inverse of the Principal Component Analysis binarization, and choosing the best binary image from the binary images generated by each binarization method and by each binarization method inverse.

In a seventh implementation of any of the preceding aspects, partitioning the binary image based on the detected stroke edge of text in the binary image comprises partitioning the binary image into sub-images by horizontal and vertical histogram projection and binarizing the sub-images.

In an eighth implementation of any of the preceding aspects, normalizing the binary image comprises setting the text as pixels of a first color and setting the background as pixels of a second color and choosing a best binary mask from the at least one binary mask candidate.

The method is performed and the instructions on the computer readable media may be processed by the device, and further features of the method and instructions on the computer readable media result from the functionality of the device. The different embodiments may be implemented in hardware, software, or any combination thereof. Also, any one of the foregoing examples may be combined with any one or more of the other foregoing examples to create a new embodiment within the scope of the present disclosure.

### BRIEF DESCRIPTION OF THE DRAWINGS

In the drawings, which are not necessarily drawn to scale, like numerals may describe similar components in different views. The drawings illustrate generally, by way of example, but not by way of limitation, various embodiments discussed in the present document.
**FIG. 1** illustrates an example where the text "NOODLES" is removed and the background is inpainted.
**FIG. 2** illustrates a translator application where inpainting is used to remove the original characters to obtain a clean background before rendering the translated text.
**FIG. 3** illustrates a general inpainting framework for rendering images in a conventional approach.
**FIG. 4** illustrates an image binarization segmentation approach for finding the text mask by converting a pixel image into a binary image having values of 0 and 255.
**FIG. 5** illustrates how the binarization process may cause loss of text information especially for the pixels on the edge of an image.
**FIG. 6** illustrates the results of existing binarization algorithms where text pixels are labelled incorrectly or the background is mislabeled as text.
**FIG. 7** illustrates a sample embodiment for generating a fusion mask for inpainting.
**FIG. 8** illustrates a detailed flow diagram for generating a fusion mask for use in creating an inpainted image in a sample embodiment.
**FIG. 9** illustrates a morphological gradient provided as the difference between the dilation image and the erosion image that is binarized.
**FIG. 10** illustrates how the morphological gradient detects text edge pixels more accurately but fails when the text and background are in low contrast.
**FIG. 11** illustrates the steps to achieve a contour mask in a sample embodiment.
**FIG. 12** illustrates a contour mask generated from an edge image.
**FIG. 13** illustrates the reason why a contour mask is desired in addition to a binary mask.
**FIG. 14** illustrates the procedure for generating a binary mask in a sample embodiment.
**FIG. 15** illustrates the binarization image resulting from processing of a gray-scale image using the CLAHE algorithm.
**FIG. 16** illustrates the input image after binarization of L in HLS as compared with other methods.
**FIG. 17** illustrates an example where the input image is binarized using PCA as compared to other methods that set the threshold only and segment the boundary of text.
**FIG. 18** illustrates an example of low contrast or illumination and the resulting binarized images.
**FIG. 19** illustrates vertical histogram projection which projects the change of black and white of each column and finds the starting column of the stroke edge.
**FIG. 20** illustrates horizontal histogram projection which projects the sum of pixel values for each row and finds the starting row of the stroke edge.
**FIG. 21** is an example showing the benefits of binarization after partitioning.
**FIG. 22** illustrates the combination of the calculated edge mask, contour mask, and binary mask to provide the fusion mask.
**FIG. 23** illustrates a comparison of the results using a traditional binary mask as compared with results using the fusion mask generated as described with respect to **FIGS. 7-22****.**
**FIG. 24** shows other examples of the technical benefits from application of the fusion mask.
**FIG. 25** illustrates the procedure of normalization where the foreground is labelled white and the most similar mask is selected by comparison of the binary mask candidates to the contour mask.
**FIG. 26** illustrates the results when the text is mislabeled as background compared to the results when the text is correctly labeled as foreground.
**FIG. 27** illustrates a comparison of the text removal and inpainting techniques as described herein to a conventional text removal and inpainting technique used in a conventional translator application.
**FIG. 28** is a block diagram illustrating circuitry for generating the fusion mask for image inpainting as described above with respect to **FIGS. 7-27** according to example embodiments.

### DETAILED DESCRIPTION

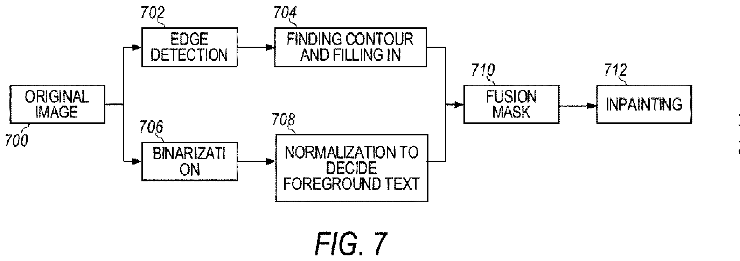

It should be understood at the outset that although an illustrative implementation of one or more embodiments are provided below, the disclosed systems and/or methods described with respect to **FIGS. 7-28** may be implemented using any number of techniques, whether currently known or in existence.

In the following description, reference is made to the accompanying drawings that form a part hereof, and in which is shown by way of illustration specific embodiments which may be practiced. These embodiments are described in sufficient detail to enable those skilled in the art to practice the methods described herein, and it is to be understood that other embodiments may be utilized and that structural, logical and electrical changes may be made without departing from the scope of the present disclosure. The following description of example embodiments is, therefore, not to be taken in a limited sense, and the scope of the present disclosure is defined by the appended claims.

The functions or algorithms described herein may be implemented in software in one embodiment. The software may consist of computer executable instructions stored on computer readable media or computer readable storage device such as one or more non-transitory memories or other type of hardware-based storage devices, either local or networked. Further, such functions correspond to modules, which may be software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system, turning such computer system into a specifically programmed machine.

As noted above, the system and method described herein extract accurate masks of text areas for inpainting by using a binary mask, edge mask, and contour mask based on a normalization of the background to pixels of one color (*e.g*., black) and pixels of the foreground to pixels of another color (*e*.*g*., white). The contour mask and at least one of the edge mask and the binary mask are combined into a fusion mask that is a union of the mask set. The fusion mask is a binary image with a pixel value of 0 or 255 at each pixel, where a pixel at a particular row and column will have a value of 255 if it is 255 in any mask. A value is 0 only if it is 0 in all of the fused masks. The fusion mask is applied to the input image to retrieve the original background for application of an inpainting algorithm. Such an approach works even for images with low quality (*e*.*g*., handwritten text) or illumination or with non-uniform (*e*.*g*., fonts outlined with different colors or background of more than one color) or angled text.

**FIG. 7** illustrates a sample embodiment for generating a fusion mask for inpainting. In this example, edge detection 702 is applied to original image 700 to convert the color image to grayscale and to detect the edge of the text to form an edge mask. Based on the edge mask, a closed edge contour is found at 704 and the closed edge contour is filled in with white pixels labeled as possible text. A binarization method 706 is used and a projection histogram is chosen to detect the stroke edge in the binary image. The image is partitioned based on the stroke edge, and several binarization methods may be applied at 706 on each subimage to obtain a binary mask. A normalization step is applied at 708 to set the text portion as white pixels and the background as black pixels for the binarization result. The best binary mask is chosen from the candidate binary images. Of course, the normalization may alternatively set the text portion as black pixels and the background as white pixels for the binarization result. The contour mask and at least one of the edge mask and the binary mask are combined into a fusion mask at 710 and the respective masks function to complement each other's advantages and disadvantages. The fusion mask is then used with an inpainting algorithm at 712.

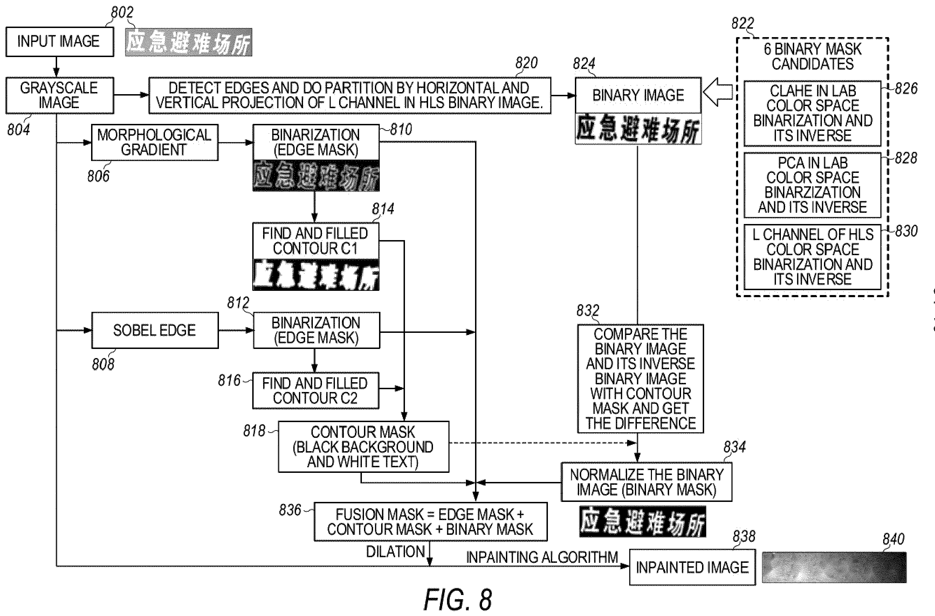

**FIG. 8** illustrates a detailed flow diagram for generating a fusion mask for use in creating an inpainted image in a sample embodiment. As illustrated in **FIG. 8****,** the fusion mask may have three components: an edge mask, a contour mask, and a binary mask, although the contour mask and at least one of the edge mask and the binary mask are combined into the fusion mask. The process includes taking an input image at 802 and converting the input image into a grayscale image at 804. The system then generates the edge mask, contour mask, and binary mask to generate a fusion mask as described below.

### Edge Mask

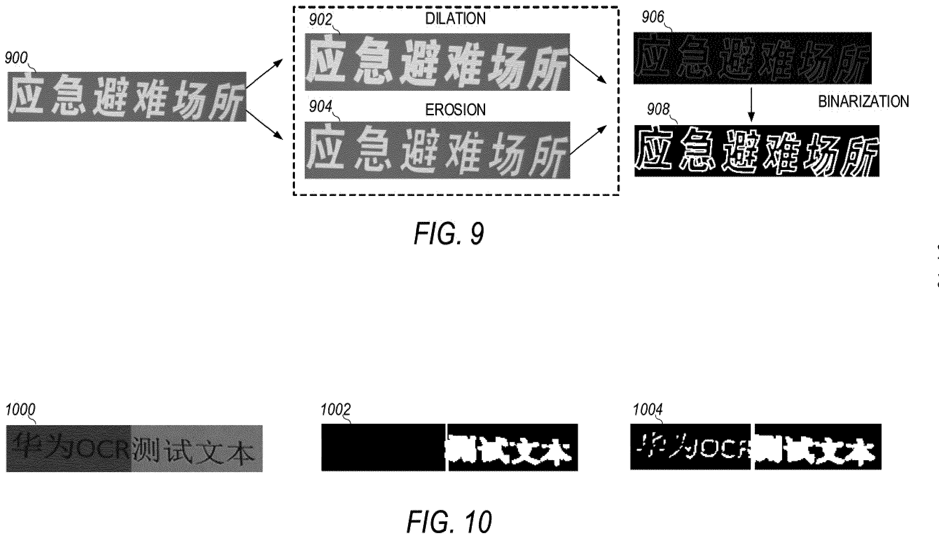

In a sample embodiment, two edge detectors are implemented: a morphological gradient and a Sobel operator. The morphological gradient finds the edge of the text at 806 by determining the difference between the dilation image 902 (expanded shape in input image 900) and the erosion image 904 (reduced shape in input image 900). As shown in **FIG. 9****,** the dilation image 902 may comprise additional pixels around the edge of the text while the erosion image 904 comprises a reduction in pixels around the edge of the text. The difference between the dilation image and erosion image is a text border image 906 that is binarized to provide the morphological gradient 908 as illustrated in

### FIG. 9.

On the other hand, the Sobel operator is applied to the grayscale image at 808 to detect the edge both in the horizontal and the vertical directions. The Sobel operator is a discrete differentiation operator that computes an approximation of the gradient of the image intensity function. The Sobel operator is typically used in edge detection algorithms to create an image emphasizing edges.

Both of these two edge detectors (morphological gradient 806 and Sobel operator 808) are robust enough to use on images with low illumination and measurable noise. As exemplified in **FIG. 10****,** the morphological gradient 806 detects text edge pixels from the input image 1000 more accurately as shown by image 1002 but fails when the text and background are in low contrast. However, as illustrated by the image 1004, the Sobel operator 808 is a good compliment in this case.

As explained below, both the contour mask and normalization are based on the edge mask.

### Contour Mask

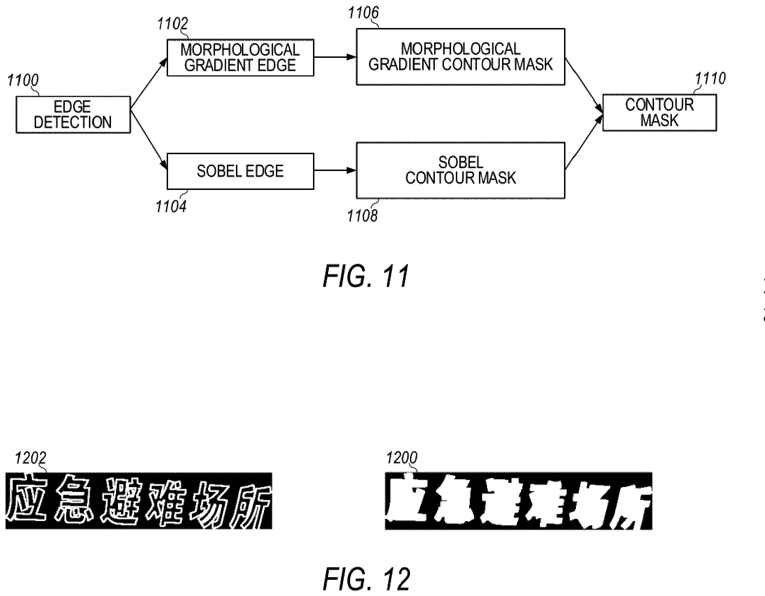

**FIG. 11** illustrates the steps to achieve a contour mask in a sample embodiment. As illustrated, the contour mask process starts with edge detection 1100. In a sample embodiment, morphological gradient edge detection 1102 and Sobel edge detection 1104 are applied to the grayscale image as described above. Each hierarchical closed text contour is retrieved from the morphological gradient edge image and Sobel edge image by the findContour() algorithm in OpenCV. This algorithm implements topological structural analysis of digitized binary images by following the border. Then, a connected components method is used to fills the pixels bounded by the contours of the morphological gradient edge image and Sobel edge image by the algorithm drawContour() in OpenCV. These processes result in a morphological gradient contour mask 1106 and Sobel contour mask 1108. The two types of contour masks 1106 and 1108 are combined into a final contour mask at 1110.

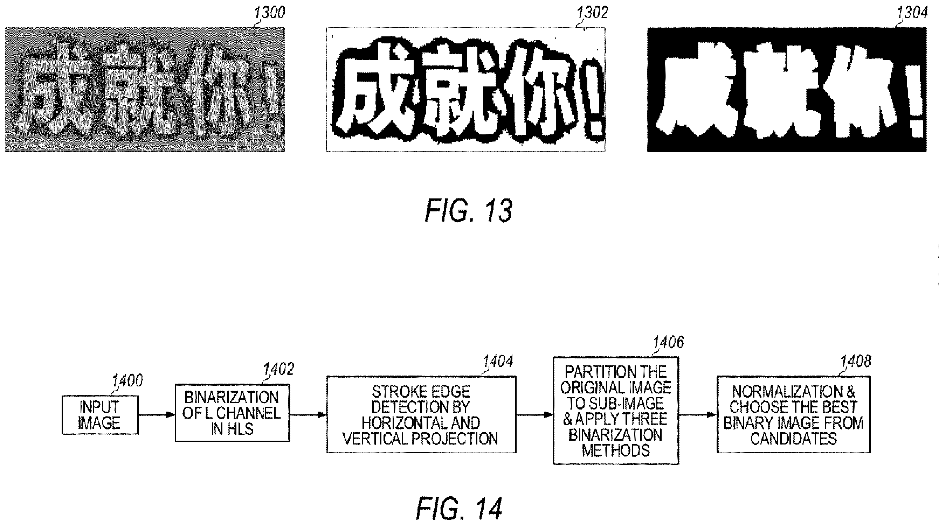

Contour is a shape descriptor and useful for text detection. Both the text contours are found and the pixels inside the contour are filled as shown in **FIG. 12** to generate contour mask 1200 from the edge image 1202. Contour mask 1200 enables inpainting for the artificial font characters. For example, in **FIG. 13** the binarization or the edge detection of the input image 1300 only segments the boundary of the text as shown at 1302. However, filling the contour as shown at 1304 resolves this issue. In the contour mask 1304, the text pixels are labeled as white and the background pixels are labeled as black, and the contour mask 1304 finds most of the text pixels.

Referring back to **FIG. 8****,** the contour mask is generated from the outputs of the morphological gradient process 806 and Sobel edge process 808 by binarization of the respective edge masks at 810 and 812 and filling of the respective contours at 814 and 816. The respective filled contours are combined into a contour mask at 818. In a sample embodiment, the contour mask is normalized to a black background with white text.

### Binary Mask

Most binarization methods have limits on threshold. It is desirable to provide a threshold that may be used in various environments for processing under a variety of different circumstances as there are occasions where one binarization generates better results than others and vice-versa. Accordingly, three different binarization methods based on Otsu and a list of candidates are provided for consideration as the final binary mask in sample embodiments. Of course, more than three binarization methods may also be implemented as desired for handling all input image cases.

**FIG. 14** illustrates the procedure for generating a binary mask in a sample embodiment. As illustrated in **FIG. 14****,** the input image 1400 is provided to one or more binarization algorithms at 1402. In a sample embodiment, three different binarization options are provided for use under different conditions.

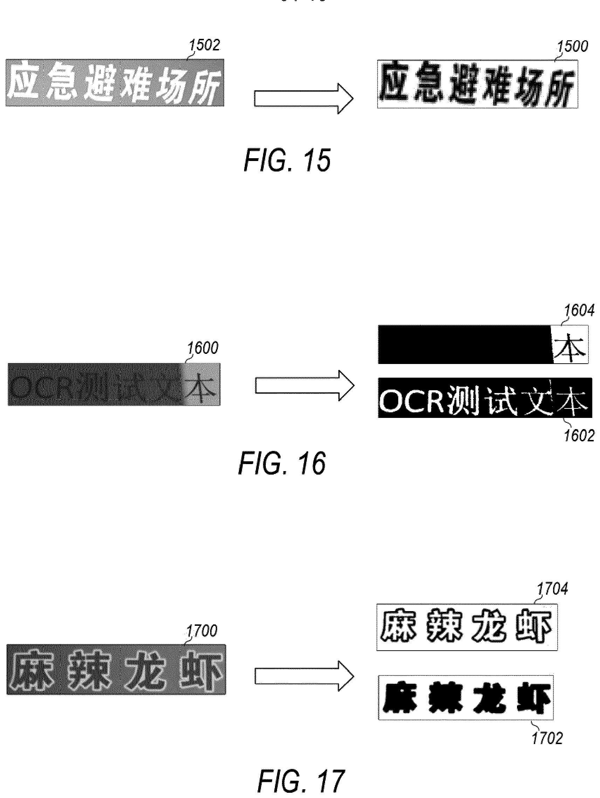

A first binarization method includes application of a Binarization of Contrast Limited Adaptive Histogram Equalization (CLAHE) algorithm that is applied to the L channel of a LAB color space (L refers to lightness, A refers to green-red color components, and B refers to blue-yellow color components). The CLAHE process uses the image enhancement for pre-processing purposes. First, histogram equalization is applied only on the L channel to enhance the contrast of the color image and to avoid amplification of noise, while preserving the brightness. Then the enhanced color image is thresholded by the Otsu global binarization algorithm. **FIG. 15** illustrates the binarization image 1500 resulting from processing of the gray-scale image 1502 using the CLAHE algorithm.

A second binarization method includes binarization of the L channel of hue, lightness, and saturation (HLS) color space. Since the L channel represents the black and white in a color, it is sensitive to light changes or shadows in the image. In this way, this binarization method is very robust with low contrast images. **FIG. 16** illustrates the input image 1600 after binarization of L in HLS at 1602 as compared with other methods at 1604.

A third binarization method provides binarization using PCA (Principal Component Analysis) of LAB color space. The Principal Component Analysis finds the primary and secondary axis in the LAB color space and the mean value of the image as well. PCA is quite sensitive to the color space rather than luminance. The PCA binarization approach is particularly useful for those characters in a fancy style. **FIG. 17** illustrates an example where the input image 1700 is binarized using PCA at 1702. Other methods set the threshold only and segments the boundary of text as shown at 1704, while PCA choose the primary value and segments text pixels correctly.

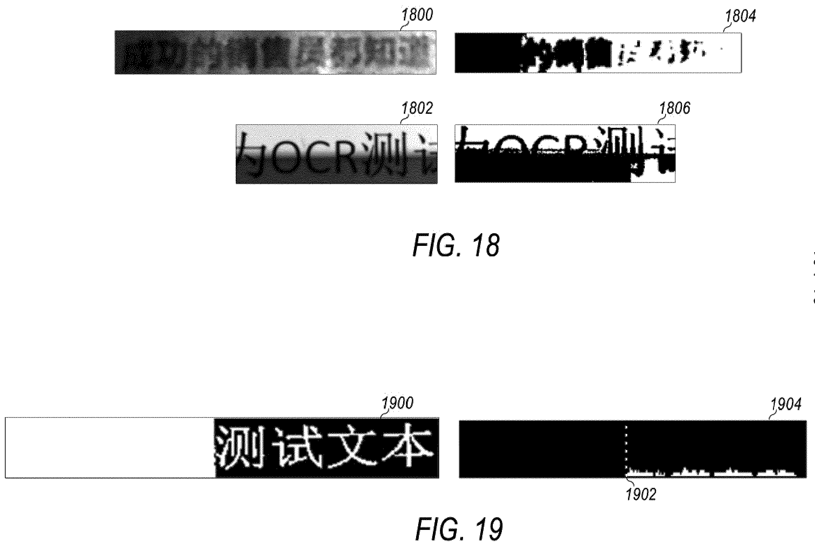

Referring back to **FIG. 14****,** once the input image has been binarized at 1402, stroke edge detection via horizontal and vertical histogram projection is applied at 1404. Though the binarization works in most cases, when the background is complex or a part of the input image has low contrast, the binarization processes may still fail. **FIG. 18** illustrates an example of low contrast or illumination at 1800 and 1802 and the resulting binarized images at 1804 and 1806. The stroke edge detection at 1404 aims to detect the edge of obvious illumination or contrast changes.

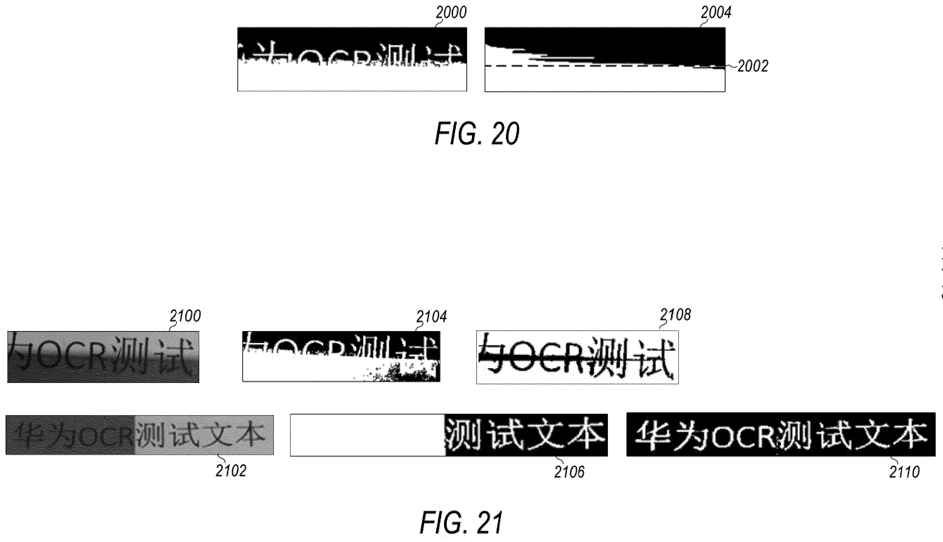

As illustrated in **FIG. 19****,** vertical histogram projection projects the change of black and white of each column in image 1900 and finds the starting column of the stroke edge 1902 in the histogram 1904. On the other hand, as illustrated in **FIG. 20****,** horizontal histogram projection projects the sum of pixel values for each row in the input image 2000 and finds the starting row of the stroke edge 2002 in the histogram 2004.

After detecting the stroke edge of the image at 1404, the original image is partitioned into sub images and the respective binarization methods are applied separately at 1406. In this way, the result benefits from the advantages of the local binarization, though it works with global binarization methods. Moreover, this method sets the window size automatically which is robust enough to adjust for different circumstances. **FIG. 21** is an example showing the benefits of binarization after partitioning. As illustrated, the input images 2100 and 2102 when binarized before partitioning as shown at 2104 and 2106 do not provide results as good as when binarization is applied after partitioning as shown at 2108 and 2110.

Each binarization result and its inverse binary image are provided in a list of binary mask candidates for selection at 1408. The best binary image from the list of candidates is evaluated and selected as the binary mask using the techniques described below.

Referring back to **FIG. 8****,** the stroke edges are detected and the partitioning by horizontal and vertical projection of the L channel in the HLS binary image is performed at 820 and 6 binarization candidates are calculated at 822 to generate the binary image 824. The 6 binarization candidates in a sample embodiment include CLAHE in LAB color space binarization and its inverse calculated at 826, PCA in LAB color space binarization and its inverse calculated at 828, and L channel of HLS color space binarization and its inverse calculated at 830. Each binary image and its inverse binary image is compared with the contour mask at 832 to identify the binary image with the smallest difference. The binary image with the smallest different is normalized at 834 to provide a binary image with white characters and black background.

### Fusion Mask

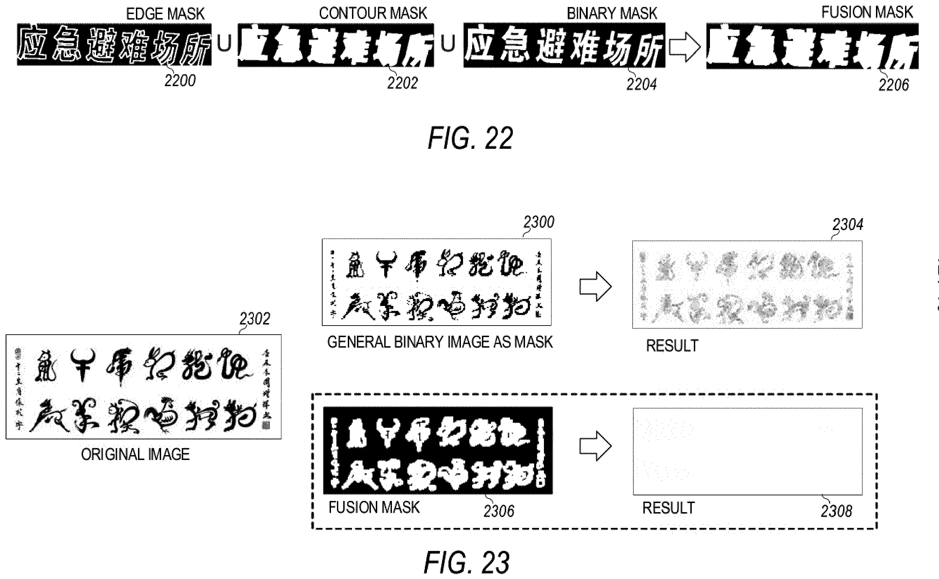

The fusion mask is achieved by the combination at 836 of the contour mask and at least one of the edge mask and the binary mask determined as described above. **FIG. 22** illustrates the combination of the calculated edge mask 2200, contour mask 2202, and binary mask 2204 to provide the fusion mask 2206. The advantages provided by each type of mask guarantee that the text pixels in the original image are fully covered. The resulting fusion mask is then dilated and applied to the original image for application of an inpainting algorithm, such as the afore-mentioned Telea inpainting algorithm, at 838. The inpainting algorithm searches for pixels on the outside edge and then fills the background image into the text area. The resultant image 840 is free of all text and the text portions of the image are filled in with the background image data.

Overall, the embodiment described above with respect to **FIGS. 7-22** is robust enough to handle a variety of different original images including handwritten images, fonts with extra outlines of different font colors, and backgrounds of more than one color. As shown in **FIG. 23****,** the fusion mask labels all possible text pixels for inpainting. On the other hand, the traditional binary mask 2300 may mislabel the text pixels of the original image 2302, especially along the edge. It leads the inpainting that fills the background with a mixture of background and text color as shown at 2304. With the fusion mask 2306 generated as described above with respect to **FIGS. 7-22****,** the text is completely removed and the background is recovered as shown at 2308.

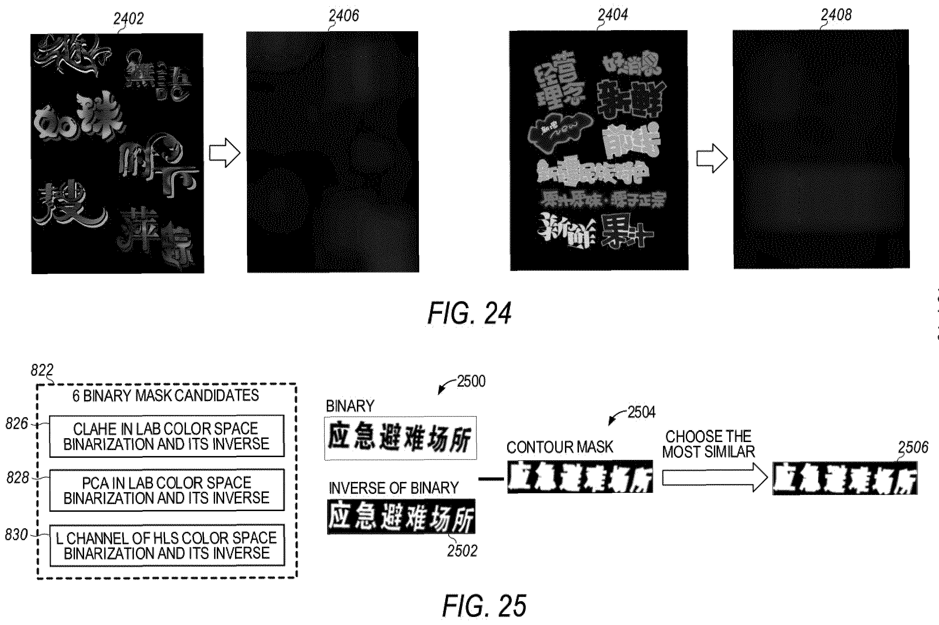

**FIG. 24** shows other examples of the technical benefits from application of the fusion mask to images 2402 and 2404. As indicated at 2406 and 2408, the fusion mask is robust for removal of all types of text.

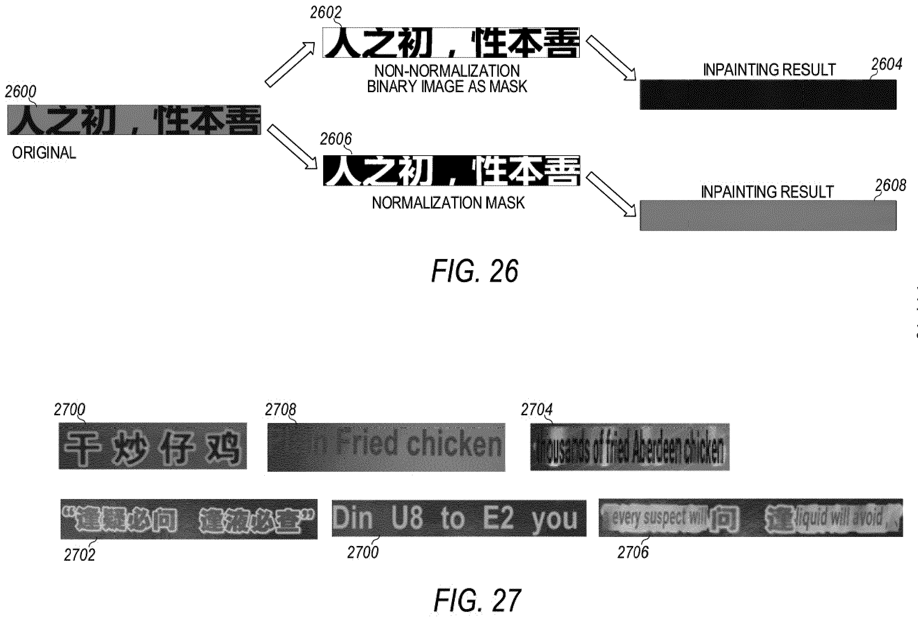

As mentioned above, the normalization of binarization results is the process that calculates the similarity between a contour mask and a binary mask candidate and then elects the best binary image. As shown in **FIG. 25****,** this process entails using each of the binary mask candidates determined at 822 and comparing the calculated binary mask 2500 and inverse binary mask 2502 to the contour mask 2504 to identify the most similar mask for selection at 2506. This normalization not only elects the binary mask but also decides the text as foreground labelled white and background labelled black since the contour mask is the standard. If the text pixel is labelled incorrectly, the inpainting would perform in a reverse way. For example, as shown in **FIG. 26****,** when the text in the original image 2600 is mislabeled as background at 2602, the background is filled with text color at 2604. However, when the text in the original image 2600 is correctly labeled as foreground at 2606, the background is filled with background color at 2608.

**FIG. 27** illustrates a comparison of the text removal and inpainting techniques as described herein to a conventional text removal and inpainting technique used in a conventional translator application. The examples 2700 and 2702 each include artificial characters. The results of the conventional translator application still have text residuals as shown at 2704 and 2706, while the results using the text removal and inpainting technique described herein do not have text residuals (2708 and 2710).

The techniques described herein are designed to extract the mask for inpainting by applying multiple features of the text image and selecting the best binary segmentation over a set of candidates. A fusion mask is used that is the combination of the contour mask and at least one of the edge mask and the binary mask to accurately label pixels for inpainting. The normalization process chooses the best binary mask that is most similar to the contour mask and guarantees that the text pixels are labelled as foreground. The resulting mask for inpainting the text region is appropriate for many cases, especially those cases where the image quality is low or the illumination is non-uniform. The resulting image inpainting may have applications for removing unwanted areas or recovering useful background information in images. Such applications include translator applications, image restoration related applications such as healing image tools on a mobile platform, and other applications of video inpainting or diminished reality. Since the processing is fast, it is particularly useful for real-time mobile platforms.

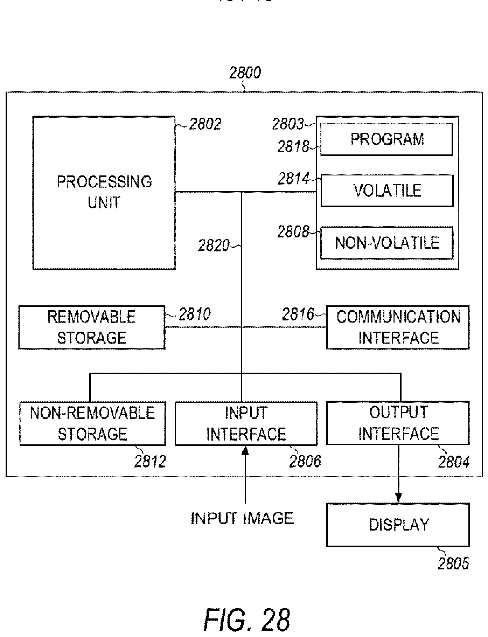

**FIG. 28** is a block diagram illustrating circuitry for generating the fusion mask for image inpainting as described above with respect to **FIGS. 7-27** according to example embodiments. All components need not be used in various embodiments. One example computing device in the form of a computer 2800 may include a processing unit 2802, memory 2803, removable storage 2810, and non-removable storage 2812. Although the example computing device is illustrated and described as computer 2800, the computing device 2800 may be in different forms in different embodiments. For example, the computing device 2800 may instead be a smartphone, a tablet, smartwatch, or other computing device. Devices, such as smartphones, tablets, and smartwatches, are generally collectively referred to as mobile devices or user equipment. Further, although the various data storage elements are illustrated as part of the computer 2800, the storage may also or alternatively include cloud-based storage accessible via a network, such as the Internet or server-based storage. Also, the method described herein may be implemented in a pipeline on one processing thread or may use multiple processors and/or multiple processing threads as appropriate.

Memory 2803 may include volatile memory 2814 and non-volatile memory 2808. Computer 2800 also may include - or have access to a computing environment that includes - a variety of computer-readable media, such as volatile memory 2814 and non-volatile memory 2808, removable storage 2810 and non-removable storage 2812. Computer storage includes random access memory (RAM), read only memory (ROM), erasable programmable read-only memory (EPROM) or electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 2800 may include or have access to a computing environment that includes input interface 2806 that receives the input image for processing, output interface 2804 that provides the processed image to display 2805, and a communication interface 2816. Display 2805 may include a display device, such as a touchscreen, that also may serve as an input device. The input interface 2806 may include one or more of a touchscreen, touchpad, mouse, keyboard, camera, one or more device-specific buttons, one or more sensors integrated within or coupled via wired or wireless data connections to the computer 2800, and other input devices. The computer 2800 may operate in a networked environment using a communication connection to connect to one or more remote computers, such as database servers. The remote computer may include a personal computer (PC), server, router, network PC, a peer device or other common DFD network switch, or the like. The communication connection may include a Local Area Network (LAN), a Wide Area Network (WAN), cellular, Wi-Fi, Bluetooth, or other networks. According to one embodiment, the various components of computer 2800 are connected with a system bus 2820.

Computer-readable instructions stored on a computer-readable medium are executable by the processing unit 2802 of the computer 2800, such as a program 2818. The program 2818 in some embodiments comprises software that, when executed by the processing unit 2802, performs the image processing operations according to any of the embodiments included herein. A hard drive, CD-ROM, and RAM are some examples of articles including a non-transitory computer-readable medium such as a storage device. The terms computer-readable medium and storage device do not include carrier waves to the extent carrier waves are deemed too transitory. Storage can also include networked storage, such as a storage area network (SAN). Computer program 2818 may include instruction modules that when processed to cause processing unit 2802 to perform one or more methods or algorithms described herein.

In an example embodiment, the computer 2800 includes an edge detector module applying edge detection to detect an edge of text in the original image as an edge mask, an edge mask module using the edge mask to find a set of hierarchical closed edge contours of the text and to fill in the closed edge contours with pixels labeled as possible text as a contour mask, a binarization module applying a binarization method to the original image to convert the original image into a binary image and to detect a stroke edge of text in the binary image, a partition module partitioning the binary image based on the detected stroke edge of text in the binary image and applying at least one binarization method on each image partition to obtain at least one binary mask candidate as foreground for inpainting, a combination module combining the contour mask and at least one of the edge mask and the binary mask into a fusion mask and applying the fusion mask to the original image to extract the text in the original image and to obtain an original background of the original image without text, and an inpainting module inpainting portions of the original image where the text has been extracted. In some embodiments, the computer 2800 may include other or additional modules for performing any one of or combination of steps described in the embodiments. Further, any of the additional or alternative embodiments or aspects of the method, as shown in any of the figures or recited in any of the claims, are also contemplated to include similar modules.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems within the scope of the appended claims.

It should be further understood that software including one or more computer-executable instructions that facilitate processing and operations as described above with reference to any one or all of steps of the disclosure can be installed in and sold with one or more computing devices consistent with the disclosure. Alternatively, the software can be obtained and loaded into one or more computing devices, including obtaining the software through physical medium or distribution system, including, for example, from a server owned by the software creator or from a server not owned but used by the software creator. The software can be stored on a server for distribution over the Internet, for example.

Also, it will be understood by one skilled in the art that this disclosure is not limited in its application to the details of construction and the arrangement of components set forth in the description or illustrated in the drawings. The embodiments herein are capable of other embodiments, and capable of being practiced or carried out in various ways. Also, it will be understood that the phraseology and terminology used herein is for the purpose of description and should not be regarded as limiting. The use of "including," "comprising," or "having" and variations thereof herein is meant to encompass the items listed thereafter and equivalents thereof as well as additional items. In addition, the terms "connected" and "coupled" and variations thereof are not restricted to physical or mechanical connections or couplings. Further, terms such as up, down, bottom, and top are relative, and are employed to aid illustration, but are not limiting.

The components of the illustrative devices, systems and methods employed in accordance with the illustrated embodiments can be implemented, at least in part, in digital electronic circuitry, analog electronic circuitry, or in computer hardware, firmware, software, or in combinations of them. These components can be implemented, for example, as a computer program product such as a computer program, program code or computer instructions tangibly embodied in an information carrier, or in a machine-readable storage device, for execution by, or to control the operation of, data processing apparatus such as a programmable processor, a computer, or multiple computers.

A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network. Also, functional programs, codes, and code segments for accomplishing the techniques described herein can be easily construed as within the scope of the claims by programmers skilled in the art to which the techniques described herein pertain. Method steps associated with the illustrative embodiments can be performed by one or more programmable processors executing a computer program, code or instructions to perform functions (*e*.*g*., by operating on input data and/or generating an output). Method steps can also be performed by, and apparatus for performing the methods can be implemented as, special purpose logic circuitry, *e*.*g*., an FPGA (field programmable gate array) or an ASIC (application-specific integrated circuit), for example.

The various illustrative logical blocks, modules, and circuits described in connection with the embodiments disclosed herein may be implemented or performed with a general purpose processor, a digital signal processor (DSP), an ASIC, a FPGA or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, *e*.*g*., a combination of a DSP and a microprocessor, a plurality of microprocessors, one or more microprocessors in conjunction with a DSP core, or any other such configuration.

Processors suitable for the execution of a computer program include, by way of example, both general and special purpose microprocessors, and any one or more processors of any kind of digital computer. Generally, a processor will receive instructions and data from a read-only memory or a random access memory or both. The required elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example, semiconductor memory devices, *e*.*g*., electrically programmable read-only memory or ROM (EPROM), electrically erasable programmable ROM (EEPROM), flash memory devices, and data storage disks (*e*.*g*., magnetic disks, internal hard disks, or removable disks, magneto-optical disks, and CD-ROM and DVD-ROM disks). The processor and the memory can be supplemented by, or incorporated in special purpose logic circuitry.

Those of skill in the art understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

As used herein, "machine-readable medium" means a device able to store instructions and data temporarily or permanently and may include, but is not limited to, random-access memory (RAM), read-only memory (ROM), buffer memory, flash memory, optical media, magnetic media, cache memory, other types of storage (e.g., Erasable Programmable Read-Only Memory (EEPROM)), and/or any suitable combination thereof. The term "machine-readable medium" should be taken to include a single medium or multiple media (*e*.*g*., a centralized or distributed database, or associated caches and servers) able to store processor instructions. The term "machine-readable medium" shall also be taken to include any medium, or combination of multiple media, that is capable of storing instructions for execution by one or more processors 2802, such that the instructions, when executed by one or more processors 2802 cause the one or more processors 2802 to perform any one or more of the methodologies described herein. Accordingly, a "machine-readable medium" refers to a single storage apparatus or device, as well as "cloud-based" storage systems or storage networks that include multiple storage apparatus or devices. The term "machine-readable medium" as used herein excludes signals *per se* to the extent such signals are deemed to be too transitory.

In addition, techniques, systems, subsystems, and methods described and illustrated in the various embodiments as discrete or separate may be combined or integrated with other systems, modules, techniques, or methods within the scope of the appended claims. Other items shown or discussed as coupled or directly coupled or communicating with each other may be indirectly coupled or communicating through some interface, device, or intermediate component whether electrically, mechanically, or otherwise.

Although the present disclosure has been described with reference to specific features and embodiments thereof, it is evident that various modifications and combinations can be made thereto within the scope of the appended claims. The specification and drawings are, accordingly, to be regarded simply as an illustration of the disclosure as defined by the appended claims, and are contemplated to cover any and all modifications, variations, combinations or equivalents that fall within the scope of the appended claims.

## Claims

1. A computer-implemented method of finding a text mask in an original image (700) for extracting text for inpainting, comprising:
applying, with one or more processors (2802), edge detection (702, 806, 808) to detect an edge of text in the original image as an edge mask (810, 812);
the one or more processors using the edge mask to find a set of hierarchical closed edge contours of the text and to fill in the closed edge contours with pixels labeled as possible text as a contour mask (704, 814, 816);
applying, with the one or more processors, a binarization method (706) to the original image (700) to convert the original image into a binary image and to detect a stroke edge of the text in the binary image (1404);
partitioning (1406), with the one or more processors, the binary image based on the detected stroke edge of the text in the binary image and applying at least one binarization method on each image partition to obtain at least one binary mask candidate as foreground for inpainting;
combining, with the one or more processors, the contour mask and at least one of the edge mask and the binary mask into a fusion mask (710) and applying the fusion mask to the original image to extract the text in the original image and to obtain an original background of the original image without the text; and
inpainting (712), with the one or more processors, portions of the original image where the text has been extracted.

2. The method of claim 1, further comprising converting the original image to a grayscale image (804) prior to applying the edge detection.

3. The method of any of claims 1-2, wherein applying the edge detection comprises applying at least one of a morphological gradient edge detection algorithm (806) or a Sobel operator edge detection algorithm (808) to the original image to detect the edge of the text in the original image.

4. The method of any of claims 1-3, wherein the using the edge mask to find the set of hierarchical closed edge contours of the text comprises applying the morphological gradient edge detection algorithm to the original image to create a morphological gradient contour mask, applying the Sobel operator edge detection algorithm to the grayscale image to create a Sobel contour mask, and combining the morphological gradient contour mask with the Sobel contour mask to create the contour mask.

5. The method of any of claims 1-4, further comprising applying a connected components method to fill in the pixels bounded by the contour mask to fill in the closed edge contour.

6. The method of any of claims 1-5, wherein applying the binarization method to the original image to convert the original image into the binary image and to detect the stroke edge of the text in the binary image comprises at least one of:
binarizing a lightness channel in a hue, lightness, and saturation color space for the original image to enhance a contrast of the original image, and taking an inverse of the binarized lightness channel in the hue, lightness, and saturation color space for the original image;
binarizing a contrast limited adaptive histogram equalization of a LAB color space binarization to enhance the contrast of the original image, and taking an inverse of the binarized contrast limited adaptive histogram equalization of the LAB color space binarization;
binarizing the lightness channel of the LAB color space by applying a Principal Component Analysis binarization to enhance the contrast of the original image, and taking an inverse of the Principal Component Analysis binarization; and
choosing a best binary image from binary images generated by each binarization method, wherein each binary image and its inverse binary image is compared with the contour mask to identify the binary image with the smallest difference as the best binary image.

7. The method of any of claims 1-6, wherein partitioning the binary image based on the detected stroke edge of the text in the binary image comprises partitioning the binary image into sub-images by horizontal and vertical histogram projection and binarizing the sub-images.

8. The method of any of claims 1-7, further comprising normalizing, with the one or more processors, the binary image to set the text as pixels of a first color and to set the background as pixels of a second color and choosing a best binary mask from the at least one binary mask candidate, the best binary mask being most similar to the contour mask.

9. An image processing device (2800) comprising:
a non-transitory memory (2803) comprising instructions; and
one or more processors (2802) in communication with the memory, wherein the one or more processors execute the instructions to implement a method according to any one of claims 1-8.

10. A non-transitory computer-readable medium storing computer instructions to find a text mask in an original image for extracting text for inpainting, that when executed by one or more processors, cause the one or more processors to perform a method according to any one of claims 1-8.

## Patentansprüche

1. Computerimplementiertes Verfahren zum Auffinden einer Textmaske in einem Originalbild (700) zum Extrahieren von Text zum Inpainting (Übermalen), umfassend:
Anwenden von Kantenerkennung (702, 806, 808) mit einem oder mehreren Prozessoren (2802), um eine Kante von Text in dem Originalbild als eine Kantenmaske (810, 812) zu erkennen;
wobei der eine oder die mehreren Prozessoren die Kantenmaske verwenden, um einen Satz hierarchischer geschlossener Kantenkonturen des Textes aufzufinden und die geschlossenen Kantenkonturen mit Pixeln aufzufüllen, die als möglicher Text gekennzeichnet sind, als eine Konturmaske (704, 814, 816);
Anwenden eines Binarisierungsverfahrens (706) mit dem einen oder den mehreren Prozessoren auf das Originalbild (700), um das Originalbild in ein binäres Bild umzuwandeln und um eine Strichkante des Textes in dem binären Bild (1404) zu erkennen;
Partitionieren (1406) des binären Bildes basierend auf der erkannten Strichkante des Textes in dem binären Bild mit dem einen oder den mehreren Prozessoren und Anwenden mindestens eines Binarisierungsverfahrens auf jede Bildpartition, um mindestens einen Kandidaten für eine binäre Maske als Vordergrund für das Inpainting zu erlangen;
Kombinieren der Konturmaske und mindestens einer von der Kantenmaske und der binären Maske zu einer Fusionsmaske (710) mit dem einen oder den mehreren Prozessoren und Anwenden der Fusionsmaske auf das Originalbild, um den Text in dem Originalbild zu extrahieren und einen Originalhintergrund des Originalbildes ohne den Text zu erlangen; und
Inpainting (712) von Abschnitten des Originalbildes, in denen der Text mit dem einen oder den mehreren Prozessoren extrahiert worden ist.

2. Verfahren gemäß Anspruch 1, ferner umfassend Umwandeln des Originalbildes in ein Graustufenbild (804) vor Anwenden der Kantenerkennung.

3. Verfahren gemäß einem der Ansprüche 1-2, wobei das Anwenden der Kantenerkennung das Anwenden mindestens eines Algorithmus zur Kantenerkennung mit morphologischem Gradienten (806) oder eines Algorithmus zur Kantenerkennung mit Sobel-Operator (808) auf das Originalbild umfasst, um die Kante des Textes in dem Originalbild zu erkennen.

4. Verfahren gemäß einem der Ansprüche 1-3, wobei Verwenden der Kantenmaske zum Auffinden des Satzes hierarchisch geschlossener Konturmasken des Textes das Anwenden des Algorithmus zur Kantenerkennung mit morphologischem Gradienten auf das Originalbild, um eine Konturmaske mit morphologischem Gradienten zu erzeugen, das Anwenden des Algorithmus zur Kantenerkennung mit Sobel-Operator auf das Graustufenbild, um eine Konturmaske mit Sobel-Operator zu erzeugen, und Kombinieren der Konturmaske mit morphologischem Gradienten mit der Sobel-Konturmaske, um die Konturmaske zu erzeugen, umfasst.

5. Verfahren gemäß einem der Ansprüche 1-4, ferner umfassend das Anwenden eines Verfahrens verbundener Komponenten zum Auffüllen der durch die Konturmaske begrenzten Pixel, um die geschlossene Kantenkontur aufzufüllen.

6. Verfahren gemäß einem der Ansprüche 1-5, wobei das Anwenden des Binarisierungsverfahrens auf das Originalbild, um das Originalbild in das binäre Bild umzuwandeln und um die Strichkante des Textes in dem binären Bild zu erkennen, mindestens eines der Folgenden umfasst:
Binarisieren eines Helligkeitskanals in einem Farbton-, Helligkeits- und Sättigungsfarbraum für das Originalbild, um einen Kontrast des Originalbildes zu steigern, und Erstellen einer Inversen des binarisierten Helligkeitskanals in dem Farbton-, Helligkeits- und Sättigungsfarbraum für das Originalbild;
Binarisieren einer kontrastbegrenzten adaptiven Histogrammentzerrung einer LAB-Farbraum-Binarisierung, um den Kontrast des Originalbildes zu steigern, und Erstellen einer Inversen der binarisierten kontrastbegrenzten adaptiven Histogrammentzerrung der LAB-Farbraum-Binarisierung;
Binarisieren des Helligkeitskanals des LAB-Farbraums durch Anwenden einer Binarisierung der Hauptkomponentenanalyse, um den Kontrast des Originalbildes zu steigern, und Erstellen einer Inversen der Binarisierung der Hauptkomponentenanalyse; und
Auswählen eines besten binären Bildes aus binären Bildern, die durch jedes Binarisierungsverfahren generiert werden, wobei jedes binäre Bild und sein inverses binäres Bild mit der Konturmaske verglichen wird, um das binäre Bild mit der geringsten Differenz als das beste binäre Bild zu identifizieren.

7. Verfahren gemäß einem der Ansprüche 1-6, wobei Partitionieren des binären Bildes basierend auf der erkannten Strichkante des Textes in dem binären Bild das Partitionieren des binären Bildes in Unterbilder durch horizontale und vertikale Histogrammprojektion und Binarisieren der Unterbilder umfasst.

8. Verfahren gemäß einem der Ansprüche 1-7, ferner umfassend Normalisieren des binären Bildes mit dem einen oder den mehreren Prozessoren, um den Text als Pixel einer ersten Farbe einzustellen und den Hintergrund als Pixel einer zweiten Farbe einzustellen, und das Auswählen einer besten binären Maske aus dem mindestens einen Kandidaten für eine binäre Maske, wobei die beste binäre Maske der Konturmaske am ähnlichsten ist.

9. Bildverarbeitungsvorrichtung (2800), umfassend:
einen nichttransitorischen Speicher (2803), umfassend Anweisungen; und
einen oder mehrere Prozessoren (2802) in Kommunikation mit dem Speicher, wobei der eine oder die mehreren Prozessoren die Anweisungen ausführen, um ein Verfahren gemäß einem der Ansprüche 1-8 implementieren.

10. Nichttransitorisches, computerlesbares Medium, das Computeranweisungen zum Auffinden einer Textmaske in einem Originalbild zum Extrahieren von Text zum Inpainting speichert, die, wenn sie von einem oder mehreren Prozessoren ausgeführt werden, den einen oder die mehreren Prozessoren veranlassen, ein Verfahren gemäß einem der Ansprüche 1-8 durchzuführen.

## Revendications

1. Procédé mis en oeuvre par ordinateur pour trouver un masque de texte dans une image d'origine (700) afin d'extraire du texte à retoucher, comprenant :
l'application, avec un ou plusieurs processeurs (2802), d'une détection de bord (702, 806, 808) pour détecter un bord de texte dans l'image d'origine en tant que masque de bord (810, 812) ;
l'un ou les plusieurs processeurs utilisant le masque de bord pour trouver un ensemble de contours de bords fermés hiérarchiques du texte et pour remplir les contours de bords fermés avec des pixels étiquetés comme texte possible en tant que masque de contour (704, 814, 816) ;
l'application, avec l'un ou les plusieurs processeurs, d'un procédé de binarisation (706) à l'image d'origine (700) pour convertir l'image d'origine en une image binaire et détecter un bord de trait du texte dans l'image binaire (1404) ;
le partitionnement (1406), avec l'un ou les plusieurs processeurs, de l'image binaire à partir du bord de trait détecté du texte dans l'image binaire et l'application d'au moins un procédé de binarisation sur chaque partition d'image pour obtenir au moins un masque binaire candidat comme premier plan pour la retouche ;
la combinaison, avec l'un ou les plusieurs processeurs, du masque de contour et d'au moins l'un du masque de bord et du masque binaire en un masque de fusion (710) et l'application du masque de fusion à l'image d'origine pour extraire le texte dans l'image d'origine et pour obtenir un arrière-plan original de l'image d'origine sans le texte ; et
la retouche (712), avec l'un ou les plusieurs processeurs, des parties de l'image d'origine où le texte a été extrait.

2. Procédé selon la revendication 1, comprenant également la conversion de l'image d'origine en une image en niveaux de gris (804) avant d'appliquer la détection de bord.

3. Procédé selon l'une quelconque des revendications 1 et 2, dans lequel l'application de la détection de bord comprend l'application d'au moins l'un d'un algorithme de détection de bord à gradient morphologique (806) ou d'un algorithme de détection de bord par opérateur Sobel (808) à l'image d'origine pour détecter le bord du texte dans l'image d'origine.

4. Procédé selon l'une quelconque des revendications 1 à 3, dans lequel l'utilisation du masque de bord pour trouver l'ensemble de contours de bords fermés hiérarchiques du texte comprend l'application de l'algorithme de détection de bord à gradient morphologique à l'image d'origine pour créer un masque de contour à gradient morphologique, l'application de l'algorithme de détection de bord par opérateur Sobel à l'image en niveaux de gris pour créer un masque de contour Sobel, et la combinaison du masque de contour à gradient morphologique avec le masque de contour Sobel pour créer le masque de contour.

5. Procédé selon l'une quelconque des revendications 1 à 4, comprenant également l'application d'un procédé de composants connectés pour remplir les pixels délimités par le masque de contour afin de remplir le contour de bord fermé.

6. Procédé selon l'une quelconque des revendications 1 à 5, dans lequel l'application du procédé de binarisation à l'image d'origine pour convertir l'image d'origine en image binaire et pour détecter le bord de trait du texte dans l'image binaire comprend au moins l'une parmi :
la binarisation d'un canal de luminosité dans un espace colorimétrique de teinte, de luminosité et de saturation pour l'image d'origine afin de renforcer un contraste de l'image d'origine, et la prise en compte de l'inverse du canal de luminosité binarisé dans l'espace colorimétrique de teinte, de luminosité et de saturation de l'image d'origine ;
la binarisation d'une égalisation d'histogramme adaptative à contraste limité d'une binarisation d'espace colorimétrique LAB pour renforcer le contraste de l'image d'origine, et la prise en compte de l'inverse de l'égalisation d'histogramme adaptative à contraste limité binarisée de la binarisation d'espace colorimétrique LAB ;
la binarisation du canal de luminosité de l'espace colorimétrique LAB en appliquant une binarisation d'analyse en composantes principales pour renforcer le contraste de l'image d'origine, et la prise en compte de l'inverse de la binarisation d'analyse en composantes principales ; et
la sélection d'une meilleure image binaire parmi les images binaires générées par chaque procédé de binarisation, dans lequel chaque image binaire et son image binaire inverse est comparée au masque de contour pour identifier l'image binaire présentant la plus petite différence comme étant la meilleure image binaire.

7. Procédé selon l'une quelconque des revendications 1 à 6, dans lequel le partitionnement de l'image binaire à partir du bord de trait détecté du texte dans l'image binaire comprend le partitionnement de l'image binaire en sous-images par projection d'histogrammes horizontale et verticale et la binarisation des sous-images.

8. Procédé selon l'une quelconque des revendications 1 à 7, comprenant également la normalisation, avec l'un ou les plusieurs processeurs, de l'image binaire pour définir le texte sous forme de pixels d'une première couleur et pour définir l'arrière-plan sous forme de pixels d'une seconde couleur et la sélection d'un meilleur masque binaire parmi l'au moins un masque binaire candidat, le meilleur masque binaire étant le plus similaire au masque de contour.

9. Dispositif de traitement d'images (2800) comprenant :
une mémoire non transitoire (2803) comprenant des instructions ; et
un ou plusieurs processeurs (2802) en communication avec la mémoire, dans lequel l'un ou les plusieurs processeurs exécutent les instructions pour mettre en oeuvre un procédé selon l'une quelconque des revendications 1 à 8.

10. Support non transitoire lisible par ordinateur stockant des instructions informatiques pour trouver un masque de texte dans une image d'origine afin d'extraire le texte à retoucher, qui, lorsqu'elles sont exécutées par un ou plusieurs processeurs, amènent l'un ou les plusieurs processeurs à mettre en oeuvre un procédé selon l'une quelconque des revendications 1 à 8.
